# FASCICULE DE BREVET EUROPEEN

(11) **EP 3 647 885 B1**
(45) Date de publication et mention de la délivrance du brevet: **07.01.2026**
(21) Numéro de dépôt: 18204123.6
(22) Date de dépôt: 02.11.2018
(51) Int. Cl.: G04G 19/00, G04G 19/02

(54) **PROCEDE DE GESTION DE LA CONSOMMATION ELECTRIQUE D'UNE MONTRE**
STEUERUNGSVERFAHREN DES STROMVERBRAUCHS EINER ARMBANDUHR
METHOD FOR MANAGING POWER CONSUMPTION OF A WATCH

(43) Date de publication de la demande: 06.05.2020
(73) Titulaire: Tissot S.A., 2400 Le Locle (CH)
(72) Inventeur: FRANZI, Edoardo, 1400 Cheseaux-Noréaz (CH); PORRET, Alain-Serge, 2000 Neuchâtel (CH)
(74) Mandataire: ICB SA

(56) Documents cités:
- JP-A- S5 567 682
- US-A1- 2008 246 437
- US-A1- 2015 323 974

## Description

### Domaine technique

La présente invention concerne un procédé de gestion de la consommation électrique d'une montre.

L'invention concerne également une montre mettant en œuvre ce procédé ainsi qu'un programme d'ordinateur.

### Art antérieur

Dans l'état de la technique, les montres utilisent classiquement des piles ou des accumulateurs comme source d'énergie. De telles sources d'énergie ont généralement une durée de vie limitée et doivent donc périodiquement être échangées ou rechargées à partir de dispositif de recharge extérieur à la montre.

Pour pallier cet inconvénient, on connaît dans l'état de l'art des montres comprenant des dispositifs de recharge qui sont aptes à transformer l'énergie mécanique produite en énergie électrique utilisable pour l'alimentation électrique de la montre. De tels dispositifs de recharge de montres prévoient pour chacune d'entre elles, d'actionner une lunette connectée à un mécanisme de génération d'électricité du dispositif afin de recharger l'accumulateur de la montre.

Cependant un inconvénient majeur de ces montres est lié au fait que le porteur est souvent conduit à effectuer le rechargement de l'accumulateur de la montre dès lors que cette dernière ne fonctionne plus. US 2008/246437 A1 divulgue concerne une montre électronique équipée d'un accumulateur rechargeable. Il décrit un système permettant d'afficher de manière fiable l'état de charge de l'accumulateur au moyen d'une aiguille se déplaçant sur un cadran gradué. Chaque graduation représente une autonomie de fonctionnement (ex. une journée), permettant ainsi à l'utilisateur d'évaluer la réserve énergétique disponible.

On comprend qu'il existe alors un besoin de trouver une solution alternative, notamment qui ne présente pas les inconvénients de l'art antérieur.

### Résumé de l'invention

Un but de la présente invention est par conséquent de proposer un procédé de gestion de la consommation électrique d'une montre permettant au porteur de la montre de contrôler de manière optimale cette gestion de la consommation.

Un autre de but de l'invention est de permettre au porteur de rationaliser et d'optimiser la force mécanique qu'il utilise pour réaliser le rechargement de la montre.

Dans ce dessein, l'invention porte sur un procédé de gestion de la consommation électrique d'une montre selon la revendication 1.

Dans d'autres de modes de réalisation :
- la sous-étape de guidage comprend une phase de diffusion desdites informations générées au porteur de la montre par l'intermédiaire des éléments de guidage visuel et/ou l'interface sonore de cette montre ;
- l'étape d'identification comprend une sous-étape de détermination périodique d'un niveau de charge de l'accumulateur ;
- l'étape d'identification comprend une sous-étape :
   ▪ d'évaluation de la consommation électrique d'une fonction réalisée par la montre, ou
   ▪ d'évaluation de la consommation électrique d'une fonction à réaliser par la montre ;
- la sous-étape de détermination et les sous-étapes d'évaluation comprennent une phase de transmission d'un message audio et/ou visuel au porteur de la montre (1) l'invitant à procéder au rechargement de l'accumulateur.

L'invention porte aussi sur une montre notamment connectée, mettant en œuvre ce procédé.

L'invention porte également sur un programme d'ordinateur comprenant des instructions de code de programme pour l'exécution des étapes de ce procédé lorsque ledit programme d'ordinateur est exécuté par une unité de traitement d'une montre.

### Brève description des figures

D'autres particularités et avantages ressortiront clairement de la description qui en est faite ci-après, à titre indicatif et nullement limitatif, en référence aux figures annexées, dans lesquelles :
- la figure 1 représente un logigramme portant sur un procédé de gestion de la consommation électrique d'une montre, selon un mode de réalisation de l'invention, et
- la figure 2 représente une montre mettant en œuvre ce procédé, selon le mode de réalisation de l'invention.

### Description détaillée de l'invention

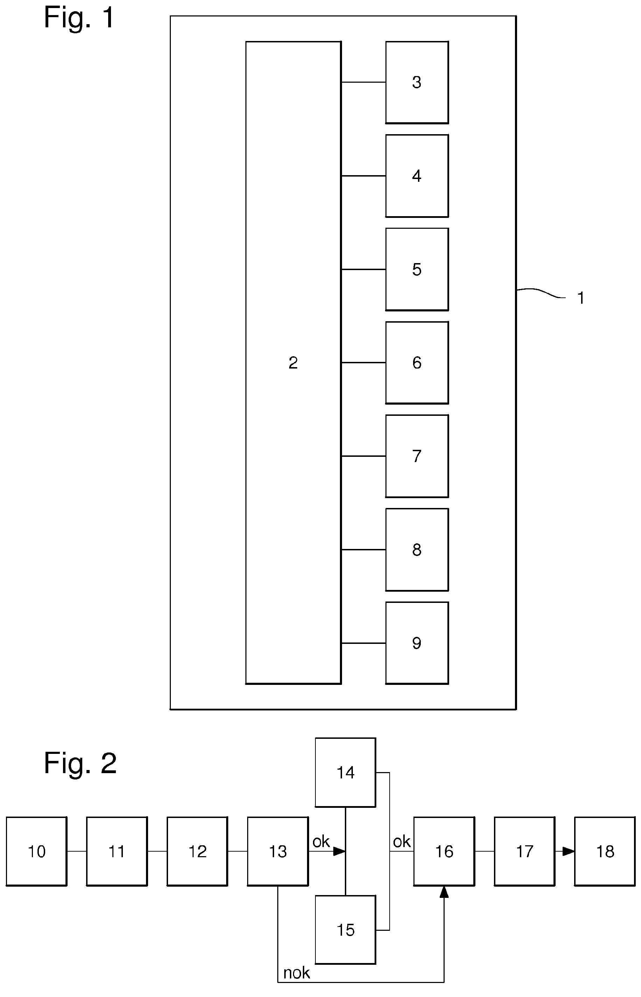

Sur la figure 1 est illustré un procédé de gestion de la consommation électrique d'une montre. Ce procédé vise à réaliser une gestion optimale de la consommation électrique de la montre en sollicitant ponctuellement le porteur de cette montre pour qu'il actionne, en étant guidé, un élément de commande 5 d'un mécanisme de génération d'énergie électrique 4 de cette montre.

Un tel procédé est mis en œuvre par une montre 1 notamment une montre mécanique connectée comprenant un mouvement mécanique. Une telle montre 1 comprend de manière non exhaustive et non limitative :
- une unité de traitement 2 comportant des ressources matérielles et logicielles en particulier au moins un processeur coopérant avec des éléments de mémoire ;
- un accumulateur 3 ;
- un mécanisme de génération d'énergie 4 comprenant un générateur électrique en liaison cinématique avec au moins un élément de commande 5 et connecté à l'accumulateur 3 ;
- un cadran d'affichage 6 hybride pourvu d'une première composante d'affichage analogique et d'une deuxième composante d'affichage numérique et/ou alphanumérique ;
- une interface sonore 7 telle qu'un haut-parleur ;
- un module de communication 8 ;
- au moins un élément de commande 5 du mécanisme de génération d'énergie 4 tel qu'une lunette ou une couronne rotative, et
- des éléments de guidage visuel 9.

Cette unité de traitement 2 de la montre 1 est reliée entre autres à l'interface sonore 7, à un accumulateur 3, au cadran d'affichage 6, au mécanisme de génération d'énergie 4, audit au moins un élément de commande 5, au module de communication 8 et aux éléments de guidage visuel 9.

Dans cette montre 1, le module de communication 8 est apte à établir une connexion avec un système de réseaux cellulaires en comprenant notamment une carte SIM (acronyme de « Subscriber Identity Module ») ou avec un système de réseaux locaux sans fil WLAN, et est aussi apte à mettre en œuvre des technologies de communication comme par exemple Bluetooth. Dans ces conditions, la montre 1 est apte à échanger des données avec un serveur distant, un ordinateur ou encore un ordiphone.

Un tel procédé comprend une étape d'identification 10 d'un besoin de rechargement d'un accumulateur 3 de la montre 1. Lors de cette étape 10, un tel besoin de rechargement de l'accumulateur 3 de la montre 1 est identifié dès lors que l'unité de traitement 2 détecte une baisse de charge de l'accumulateur 3 résultant par exemple de l'exécution d'une fonction de la montre 1 ou encore dès lors que cette unité détermine qu'une fonction de cette montre 1 va être exécutée ou a été exécutée.

Dans ce contexte, on notera que les fonctions de la montre 1 peuvent être de préférence celles qui consomment plus d'énergie électrique en comparaison avec des fonctions d'affichage de l'heure et/ou de la date faibles consommatrice d'énergie. Ces fonctions concernent par exemple :
- une récupération de données telles que des prévisions météorologiques du jour qui implique l'utilisation notamment du module de communication 8 ;
- une utilisation d'un baromètre de la montre 1 ;
- une utilisation d'un altimètre de la montre 1 ;
- une utilisation d'un système de navigation ;
- une utilisation d'une boussole ;
- une utilisation d'un système de « Tracking & POI » ;
- une utilisation d'un système d'évaluation d'un nombre de pas ;
- une utilisation d'un système d'évaluation d'énergie calorique dépensée,
- une utilisation d'un système d'évaluation d'une distance parcourue,
- une alarme ;
- un chronomètre ;
- un compte à rebours, et
- etc...

Cette étape 10 comprend alors une sous-étape de détermination 11 périodique d'un niveau de charge de l'accumulateur 3. Pour ce faire, cette sous-étape 11 comprend une phase de mesure 12 du niveau de charge de l'accumulateur 3 de la montre 1. Une fois cette mesure établie, cette sous-étape 11 prévoit une phase de comparaison 13 de cette mesure de ce niveau de charge avec un seuil de référence. Si cette mesure est inférieure à ce seuil de référence alors l'accumulateur 3 a besoin d'être rechargé. En effet, dans ce contexte, le niveau de charge de l'accumulateur 3 de la montre 1 ne permet pas l'exécution des fonctions de la montre 1 de manière correcte et/ou suffisante. Dans ce contexte, cette sous-étape 11 prévoit la réalisation d'une phase de transmission 16 d'un message audio et/ou visuel au porteur de la montre 1 l'invitant à procéder au rechargement de l'accumulateur 3. Un tel message est généré par l'unité de traitement 2 et transmis au porteur par l'intermédiaire du cadran d'affichage 6 notamment de la deuxième composante de ce cadran 6, et/ou par l'interface sonore 7.

A l'inverse, si cette mesure est supérieure à ce seuil de référence alors l'étape d'identification 10 d'un besoin prévoit la mise en œuvre d'une sous-étape :
- évaluation 14 de la consommation électrique d'une fonction réalisée par la montre 1, ou
- évaluation 15 de la consommation électrique d'une fonction à réaliser par la montre 1.

Lors de la sous-étape d'évaluation 15 de la consommation électrique de la fonction réalisée par la montre 1, lorsque l'unité de traitement 2 détecte la fin de la réalisation d'une fonction, cette unité 2 détermine alors la consommation électrique engendrée par l'exécution de cette fonction. Plus précisément, dès que le début de l'initiation de l'exécution de la fonction est détecté par l'unité de traitement 2, ce dernier réalise de manière simultanée ou quasi-simultanée une mesure de l'état de charge de l'accumulateur 3. Par la suite, dès la fin de l'exécution de cette fonction, l'unité de traitement 2 réalise de nouveau une mesure de l'état de charge de l'accumulateur 3 et détermine alors la consommation électrique relative à la réalisation de cette fonction. A partir de la détermination de cette consommation, l'unité de traitement 2 est apte à quantifier le besoin de rechargement de l'accumulateur 3 afin de compenser l'énergie électrique consommer lors de la mise en œuvre de cette fonction. Dans ce contexte, cette sous-étape 15 prévoit ensuite la réalisation d'une phase de transmission 16 d'un message audio et/ou visuel au porteur de la montre 1 l'invitant à procéder au rechargement de l'accumulateur 3. Un tel message est généré par l'unité de traitement 2 et transmis au porteur par l'intermédiaire du cadran d'affichage 6 notamment de la deuxième composante de ce cadran, et/ou par l'interface sonore 7.

Lors de la sous-étape d'évaluation 18 de la consommation électrique de la fonction à réaliser par la montre 1, lorsque l'unité de traitement 2 détecte une réalisation futur d'une fonction par exemple lors de la programmation d'une alarme, ou encore du début de l'initiation d'une fonction, cette unité 2 évalue alors la consommation électrique potentielle qui sera engendrée par l'exécution de cette fonction. Une telle évaluation est réalisée par l'unité de traitement 2 notamment sur la base de données statistiques d'utilisation habituelle de cette fonction par le porteur. A partir de la détermination de cette consommation, l'unité de traitement 2 est apte à quantifier le besoin requis de rechargement de l'accumulateur 3 nécessaire à l'exécution de cette fonction afin de compenser l'énergie électrique qui sera consommée. Dans ce contexte, cette sous-étape 18 prévoit la réalisation d'une phase de transmission 16 d'un message audio et/ou visuel au porteur de la montre 1 l'invitant à procéder au rechargement de l'accumulateur 3. Un tel message est généré par l'unité de traitement 2 et transmis au porteur par l'intermédiaire du cadran d'affichage 6 notamment de la deuxième composante de ce cadran, et/ou par l'interface sonore 7. Ce message peut être transmis au porteur par exemple à la suite de la programmation de l'exécution de la fonction (pour l'exemple de la programmation de l'alarme) ou encore dès le début de de l'initiation de la fonction.

On notera dans le cadre de ce procédé qu'à réception du message proposant de réaliser le rechargement de l'accumulateur 3 de la montre 1, le porteur a la possibilité de refuser cette proposition, de la reporter à une date ultérieure ou à l'effectuer de suite.

Dans la mesure où le porteur accepte d'effectuer le rechargement notamment par l'intermédiaire de sa montre 1, le procédé prévoit alors une étape de rechargement 17 de l'accumulateur 3 par l'actionnement guidé d'un élément de commande 5 d'un mécanisme de génération d'énergie 4 électrique de la montre 1. Ce mécanisme de génération d'énergie 4 est apte à transformer l'énergie mécanique produite par l'actionnement de l'élément de commande 5, en énergie électrique. Cette étape 17 comprend une sous-étape de guidage 18 visuel et/ou sonore dans l'actionnement de l'élément de commande 5 du mécanisme de génération d'énergie 4 électrique. Cette sous-étape 18 comprend une phase de génération 19 d'informations de pilotage de l'élément de commande 5. Par la suite la sous-étape de guidage 18 comprend une phase de diffusion 20 desdites informations générées au porteur de la montre 1 par l'intermédiaire des éléments de guidage visuel 9 et/ou l'interface sonore 7 de cette montre 1. De telles informations sont générées à partir de la quantification du besoin de rechargement identifié. Ces informations comprennent notamment la distance de déplacement et/ou le temps nécessaire à l'actionnement de l'élément de commande 5 du mécanisme de génération d'énergie 4 pour pallier au besoin identifié. On notera que les éléments de guidage visuel 9 sont définis dans la montre de manière à permettre au porteur d'identifier et quantifier visuellement le déplacement de l'élément de commande. Ces éléments de guidage 9 peuvent donc être agencés dans le cadran, la carrure, la lunette ou encore générés dans la deuxième composante d'affichage du cadran.

Dans un premier exemple, des appliques transparentes/translucides du cadran peuvent être éclairées distinctement les unes des autres par des sources lumineuses agencées derrière ce cadran afin d'indiquer au porteur sur quelle distance de déplacement qu'il convient d'actionner un élément de commande 5 comme la lunette de cette montre 1. Ces appliques peuvent par exemple être éclairées entre un point de départ situé à 12 heures et un point d'arrivée à 6 heures pour un déplacement de la lunette réalisé dans le sens de la marche des aiguilles de la montre 1. Dans cette configuration, la lunette peut alors comprendre un point de repère éclairé ou pas, positionné donc au point de départ ici à 12 heures. Cette sous-étape 18 peut prévoir une phase de détection de la position du point de repère de la lunette afin de faire coïncider le point de départ avec ce point de repère.

Dans un deuxième exemple, les appliques éclairées peuvent correspondre au temps nécessaire d'actionnement par le porteur de l'élément de commande 5 qui peut être ici la lunette ou la couronne. Dans cette configuration, cette sous-étape 18 peut prévoir une réalisation constante ou périodique d'une prise de mesure de l'état de charge de l'accumulateur 3 durant toute la durée de l'actionnement de l'élément de commande 5 pour mettre à jour en conséquence le temps nécessaire au rechargement.

Dans un troisième exemple similaire au premier ou au deuxième exemple, l'indication visuelle apportée par les appliques éclairées sont remplacées par une indication sonore et ce, par l'intermédiaire de l'interface sonore 7 de la montre 1.

## Revendications

1. Procédé de gestion de la consommation électrique d'une montre (1) comprenant :
- une étape d'identification (10) d'un besoin de rechargement d'un accumulateur (3) de la montre (1), un tel besoin de rechargement de l'accumulateur (3) de la montre (1) étant identifié dès lors que qu'unité de traitement (2) de cette montre (1) détecte une baisse de charge de l'accumulateur (3), **caractérisé en ce que**:
- ledit besoin de rechargement est identifié dès lors que cette unité (2) détermine qu'une fonction de cette montre (1) va être exécutée ou a été exécutée, et
- le procédé comprend une étape de rechargement (17) dudit accumulateur (3) par l'actionnement guidé d'un élément de commande (5) d'un mécanisme de génération d'énergie électrique (4) de la montre (1) si le besoin de rechargement est identifié,
ladite étape de rechargement (17) comprenant une sous-étape de guidage (18) visuel et/ou sonore dans l'actionnement de l'élément de commande (5) du mécanisme de génération d'énergie électrique (4), ladite sous-étape de guidage (18) comprenant une phase de génération (19) d'informations de pilotage de l'élément de commande (5), lesdites informations comprenant une distance de déplacement et/ou un temps nécessaire à l'actionnement de l'élément de commande (5) du mécanisme de génération d'énergie pour pallier au besoin identifié.

2. Procédé selon la revendication précédente, **caractérisé en ce que** la sous-étape de guidage (18) comprend une phase de diffusion (20) desdites informations générées au porteur de la montre (1) par l'intermédiaire des éléments de guidage visuel et/ou l'interface sonore (7) de cette montre (1).

3. Procédé selon l'une quelconque des revendications précédentes, **caractérisé en ce que** l'étape d'identification (10) comprend une sous-étape de détermination (11) périodique d'un niveau de charge de l'accumulateur (3).

4. Procédé selon l'une quelconque des revendications précédentes, **caractérisé en ce que** l'étape d'identification (10) comprend une sous-étape :
- d'évaluation (14) de la consommation électrique d'une fonction réalisée par la montre (1), ou
- d'évaluation (15) de la consommation électrique d'une fonction à réaliser par la montre (1).

5. Procédé selon l'une quelconque des revendications 3 et 4, **caractérisé en ce que** la sous-étape de détermination (11) et les sous-étapes d'évaluation (14, 15) comprennent une phase de transmission d'un message audio et/ou visuel au porteur de la montre (1) l'invitant à procéder au rechargement de l'accumulateur (3).

6. Montre (1) notamment connectée, mettant en œuvre le procédé selon l'une quelconque des revendications précédentes.

7. Programme d'ordinateur comprenant des instructions de code de programme pour l'exécution des étapes (10 à 18) du procédé selon la revendication précédente lorsque ledit programme d'ordinateur est exécuté par une unité de traitement (2) d'une montre (1).

## Patentansprüche

1. Verfahren zum Verwalten des Energieverbrauchs einer Uhr (1), umfassend:
- einen Identifizierungsschritt (10), in dem ein Bedarf zum Wiederaufladen eines Energiespeichers (3) in der Uhr (1) identifiziert wird, wobei ein derartiger Bedarf zum Wiederaufladen des Energiespeichers (3) in der Uhr (1) identifiziert wird, sobald die Verarbeitungseinheit (2) in dieser Uhr (1) eine niedrige Ladung in dem Energiespeicher (3) detektiert, **dadurch gekennzeichnet, dass**:
- der Wiederaufladungsbedarf identifiziert wird, sobald diese Einheit (2) feststellt, dass eine Funktion dieser Uhr (1) ausgeführt werden wird oder ausgeführt wurde, und - das Verfahren einen Wiederaufladungsschritt (17) umfasst, in dem der Energiespeicher (3) durch die geführte Betätigung eines Steuerelements (5) eines elektrischen Energieerzeugungsmechanismus (4) in der Uhr (1) aufgeladen wird, wenn der Wiederaufladungsbedarf identifiziert wird,
der Wiederaufladeschritt (17) einen visuellen und/oder akustischen Führungsunterschritt (18) zum Betätigen des Steuerelements (5) des elektrischen Energieerzeugungsmechanismus (4) umfasst, wobei der Führungsunterschritt (18) eine Phase umfasst, in der Steuerinformationen für das Steuerelement (5) erzeugt werden (19), wobei die Informationen eine Reisestrecke und/oder eine Zeit umfassen, die erforderlich sind, um das Steuerelement (5) des Energieerzeugungsmechanismus zu betätigen, um dem identifizierten Bedarf zu entsprechen.

2. Verfahren nach dem vorhergehenden Anspruch, **dadurch gekennzeichnet, dass** der Führungsunterschritt (18) eine Übertragungsphase (20) umfasst, in der die erzeugten Informationen mittels der visuellen Führungselemente und/oder der Audioschnittstelle (7) in der Uhr (1) an den Träger der Uhr (1) gesendet werden.

3. Verfahren nach einem der vorhergehenden Ansprüche, **dadurch gekennzeichnet, dass** der Identifizierungsschritt (10) einen periodischen Bestimmungsunterschritt (11) zum Bestimmen eines Ladungspegels des Energiespeichers (3) umfasst.

4. Verfahren nach einem der vorhergehenden Ansprüche, **dadurch gekennzeichnet, dass** der Identifizierungsschritt (10) einen Unterschritt umfasst:
- zum Auswerten (14) des Energieverbrauchs einer von der Uhr (1) ausgeführten Funktion, oder
- zum Auswerten (15) des Energieverbrauchs einer von der Uhr (1) auszuführenden Funktion.

5. Verfahren nach einem der Ansprüche 3 und 4, **dadurch gekennzeichnet, dass** der Bestimmungsunterschritt (11) und die Auswertungsunterschritte (14, 15) eine Übertragungsphase zum Senden einer akustischen und/oder visuellen Nachricht an den Träger der Uhr (1), die diesen auffordert, den Energiespeicher (3) wieder aufzuladen, umfassen.

6. Uhr (1), insbesondere eine intelligente Uhr, die das Verfahren nach einem der vorhergehenden Ansprüche implementiert.

7. Computerprogramm, umfassend Programmcodeanweisungen für ein Ausführen der Schritte (10 bis 18) in dem Verfahren nach dem vorhergehenden Anspruch, wenn das Programm von einer Verarbeitungseinheit (2) in einer Uhr (1) ausgeführt wird.

## Claims

1. A method for managing the power consumption of a watch (1) comprising:
- an identification step (10) in which a need to recharge an accumulator (3) in the watch (1) is identified, such a need to recharge the accumulator (3) in the watch (1) being identified as soon as the processing unit (2) in this watch (1) detects a low charge in the accumulator (3), **characterised in that**:
- said recharging need is identified as soon as this unit (2) determines that a function of this watch (1) is going to be performed or has been performed, and - the method comprises a recharging step (17) in which said accumulator (3) is recharged by the guided actuation of a control element (5) of an electrical energy-generation mechanism (4) in the watch (1) if the recharging need is identified,
said recharging step (17) comprising a visual and/or audio guidance sub-step (18) for actuating the control element (5) of the electrical energy-generation mechanism (4), said guidance sub-step (18) comprising a phase in which control information for the control element (5) is generated (19), said information comprising a travel distance and/or a time required to actuate the control element (5) of the energy-generation mechanism in order to meet the identified need.

2. The method according to the preceding claim, **characterised in that** the guidance sub-step (18) comprises a transmission phase (20) in which said generated information is sent to the wearer of the watch (1) by means of the visual guidance elements and/or the audio interface (7) in said watch (1).

3. The method according to any of the preceding claims, **characterised in that** the identification step (10) comprises a periodic determination sub-step (11) for determining a charge level of the accumulator (3).

4. The method according to any of the preceding claims, **characterised in that** the identification step (10) comprises a sub-step:
- for evaluating (14) the power consumption of a function performed by the watch (1), or
- for evaluating (15) the power consumption of a function to be performed by the watch (1).

5. The method according to any of claims 3 and 4, **characterised in that** the determination sub-step (11) and the evaluation sub-steps (14, 15) comprise a transmission phase for sending an audio and/or visual message to the wearer of the watch (1) inviting him/her to recharge the accumulator (3).

6. A watch (1), in particular a smartwatch, implementing the method according to any of the preceding claims.

7. A computer program comprising program code instructions for executing the steps (10 to 18) in the method according to the preceding claim when said computer program is executed by a processing unit (2) in a watch (1).
